# EUROPEAN PATENT SPECIFICATION

(11) **EP 0 502 653 B1**
(45) Date of publication and mention of the grant of the patent: **24.07.1996**
(21) Application number: 92301683.6
(22) Date of filing: 27.02.1992
(51) Int. Cl.: A01D 45/02

(54) **Apparatus for converting gathering chain profiles in forage harvester row crop attachments**
Vorrichtung zur Verwandlung der Sammelkettenumrisse in den Hackfruchtausrüstungen der Feldhäcksler
Dispositif pour convertir les contours des chaînes collectrices dans les équipements de récolteuses-hacheuses pour plantes sarclées

(30) Priority: 06.03.1991 US 665050; 06.03.1991 US 665070
(43) Date of publication of application: 09.09.1992
(73) Proprietor: NEW HOLLAND BELGIUM N.V., B-8210 Zedelgem (BE)
(72) Inventor: Bich, Gary L., New Holland, Pennsylvania, PA 17557-0903 (US); Hall, Larry D., New Holland, Pennsylvania, PA 17557-0903 (US)
(74) Representative: Singleton, Jeffrey

(56) References cited:
- US-A- 4 086 749
- US-A- 4 337 612
- US-A- 4 397 134
- US-A- 4 813 217

## Description

This invention relates generally to forage harvesters and, in particular, to forage harvester row crop attachments.

Row crop attachments for forage harvesters typically include a plurality of row crop divider units arranged side-by-side on a base frame to define a plurality of crop conveying paths through which gathering chains pass. Rotary knives are provided adjacent an entrance of each conveying path for cutting off crop material before it is conveyed rearwardly through the conveying paths by the gathering chains. The gathering chains are disposed in an extended profile as shown in U.S. Patent No. 4,397,134 to H. N. Lausch et al, or they are disposed in a non-extended profile as shown in U.S. Patent No. 4,813,217 to R. Arnold. When the gathering chains are in the extended profile, they each wrap around a drive sprocket and two idler sprockets with one of the idler sprockets located in an extended position forwardly of the rotary knives. In the non-extended profile, the idler sprockets in the forwardly extended positions are eliminated so that each gathering chain wraps around a drive sprocket and only one idler sprocket. A drawback of the row crop attachments shown in the aforementioned Lausch et al and Arnold patents is that the gathering chains cannot be converted between extended and non-extended profiles.

U.S. Patent No 4,086,749 to J. G. Greiner et al also discloses a typical row crop attachment for a forage harvester as discussed above in relation to Lausch et al and Arnold. Lausch et al and Greiner also disclose spring-loaded adjustment mechanisms supported by heavy framework and operable to adjust the tension of, and take up the slack in, the gathering chains. A drawback of the row crop attachments disclosed in the Lausch et al and the Greiner et al patents is that the gathering chain adjustment mechanisms are associated with the idler sprockets that are located in the forwardly extended positions. This results in the heavy framework supporting the gathering chain adjustment mechanisms being located ahead of the rotary knives (in the direction of travel during normal operation) where it has a tendency to knock down crop material before it can be cut off.

It is an object of the present invention to provide apparatus for converting gathering chains in forage harvester row crop attachments between extended and non-extended profiles.

According to the present invention, a row crop attachment for forage harvesters includes a base frame, a plurality of row crop divider units arranged side-by-side on the base frame to define a plurality of crop conveying paths. A pair of gathering chains are arranged to pass through each crop conveying path from an entrance to an exit thereof. A pair of rotary knives are disposed adjacent the entrance of each crop conveying path. An improvement comprises apparatus for converting gathering chain profiles between an extended profile where a gathering chain is wrapped around a drive sprocket and a pair of idler sprockets with one of the idler sprockets being located forwardly of the rotary knives and a non-extended profile where a gathering chain is wrapped around the drive sprocket and the other idler sprocket so that the forwardly located idler sprocket is eliminated. In the preferred embodiment, the converting apparatus comprises a bar supporting the forwardly located idler sprocket at one end thereof while the other end of the bar is releasably fastened to framework of the row crop attachment.

A forage harvester embodying the present invention will now be described in greater detail, by way of example, with reference to the accompanying drawings, in which:-
Fig. 1 is a front perspective view of a row crop attachment for forage harvesters incorporating the preferred embodiment of the present invention;
Fig. 2 is a sectional view taken along lines 2-2 in Fig. 1;
Fig. 3 is an enlarged sectional view taken along lines 3-3 in Fig. 1;
Fig. 4 is an enlarged sectional view taken along lines 4-4 in Fig. 2;
Fig. 5 is a sectional view taken along lines 5-5 in Fig. 2;
Fig. 6 is an enlarged sectional view taken along lines 6-6 in Fig. 5;
Fig. 7 is an enlarged sectional view taken along lines 7-7 in Fig. 4; and
Fig. 8 is an enlarged sectional view taken along lines 8-8 in Fig. 4.

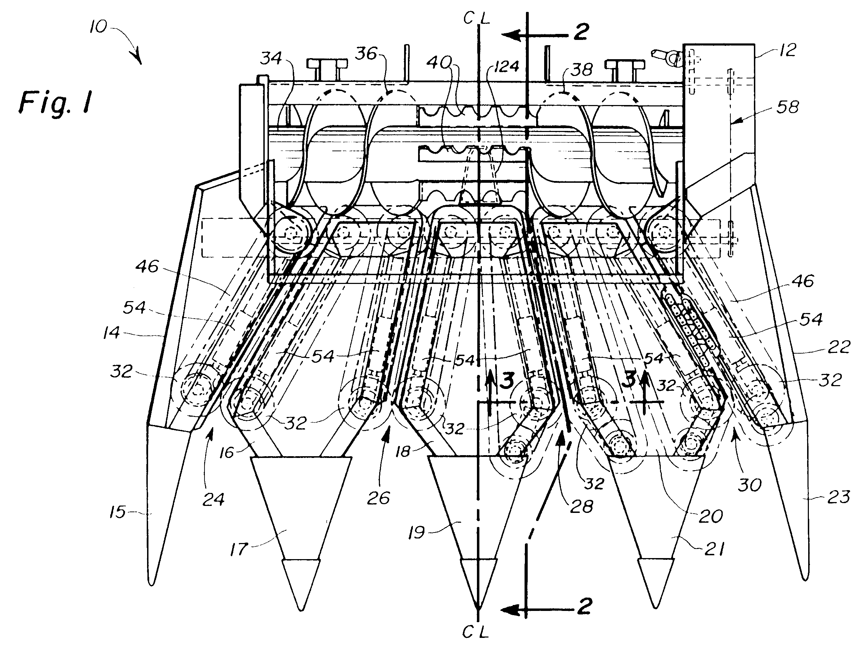

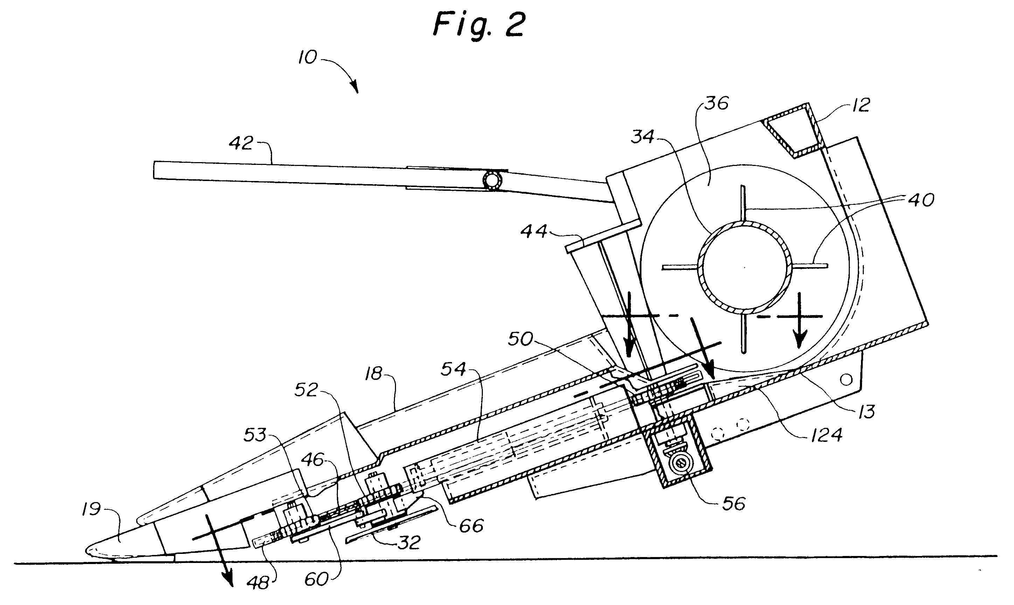

Referring to Figs. 1 and 2, a row crop attachment 10 has a base frame 12 adapted for mounting on a forage harvester (not shown). The attachment 10 includes a plurality of row crop divider units 14, 16, 18, 20 and 22 arranged side-by-side on base frame 12 to define crop conveying paths 24, 26, 28 and 30 through which crop material is conveyed. Disposed adjacent an entrance to each of the conveying paths 24, 26, 28 and 30 are a pair of counterrotating knives 32 with cooperating cutting edges for cutting off crop material near the ground before it is conveyed rearwardly through the conveying paths. An exit of each of the conveying paths 24, 26, 28 and 30 is disposed adjacent a converging auger 34 which is mounted above a floor 13 in the base frame 12. As viewed in Fig. 1, the auger 34 has opposed flighting 36 and 38, respectively, for converging crop material exiting from the conveying paths 24, 26, 28 and 30 toward centrally disposed paddles 40 on the auger 34. Paddles 40 feed crop material rearwardly into feed rolls (not shown) of a forage harvester where it is processed in a conventional manner. The attachment 10 also includes a stalk guide 42 and feed assist rollers 44 for the purposes described in U.S. Patent No. 4,215,527 to J. E. Shriver et al and U.S. Patent No. 4,901,510 to J. R. McClure et al. Snouts 15, 17, 19, 21 and 23 are attached to the leading ends of the divider units 14, 16, 18, 20 and 22, respectively.

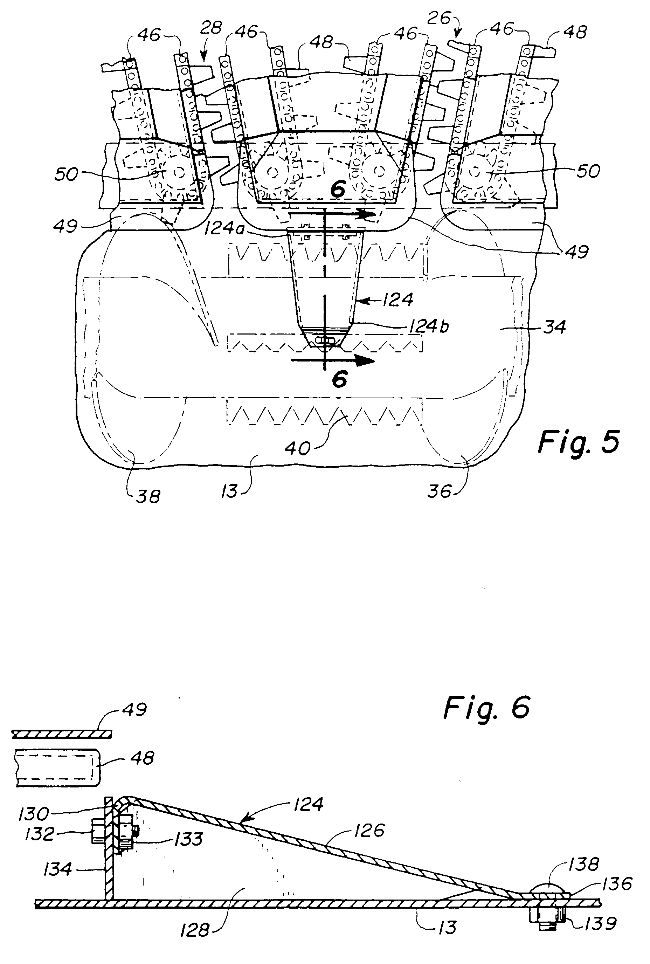

A pair of gathering chains 46 with cooperating lugs 48 pass through each of the conveying paths 24, 26, 28 and 30 from the entrance to the exit thereof in order to convey crop material through the conveying paths 24, 26, 28 and 30. Each gathering chain 46 is wrapped around a drive sprocket 50 and one or two idler sprockets 52, 53. Stripper plates 49, best shown in Fig. 5, are located above the drive sprockets 50 for stripping crop material from the lugs 48 of the gathering chains 46. Adjustment mechanisms 54 are provided for tensioning and taking up slack in the gathering chains 46. The drive sprockets 50 are powered by a bevel gear arrangement 56 (Figure 2) which receives its power from a drive line 58 that is connected to the forage harvester. As seen in Fig. 1, the gathering chains 46 passing through each of the conveying paths 24 and 26 (i.e. left of longitudinal center line CL) are in a non-extended configuration where a drive sprocket 50 and one idler sprocket 52 are employed, while the gathering chains 46 passing through each of the conveying paths 28 and 30 (i.e. to the right of longitudinal center line CL) are in an extended configuration where a drive sprocket 50 and two idler sprockets 52, 53 are used. It will be understood that the gathering chains 46 are shown in this combination of non-extended and extended configurations only for purposes of illustration. During normal operation of the row crop attachment 10, all of the gathering chains 46 would be in either the non-extended or the extended configuration.

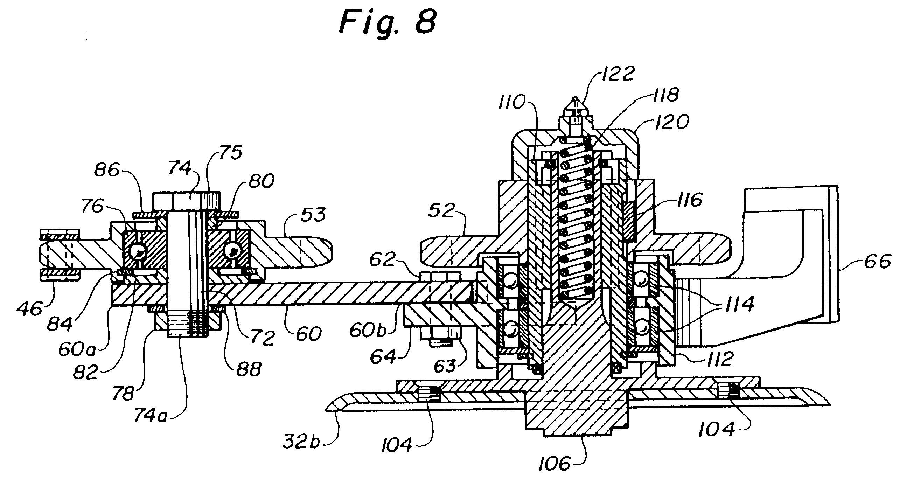

By utilizing bars 60 best shown in Figs. 2, 4 and 8, the gathering chains 46 may be easily and quickly converted between their non-extended and extended configurations. Each bar 60 supports an idler sprocket 53 in cantilevered manner at its outer end 60a while being fastened by bolts 62 and nuts 63 at its inner end 60b to a flange 64 which is formed on framework 66. The flanges 64 each have a series of alternating circular holes 68 and elongated slots 70 formed therein so that the bars 60 may be used universally to convert any of the gathering chains 46 from the non-extended to the extended configuration. The outer end 60a of each bar 60 has a hole 72 for receiving a bolt 74 on which an idler sprocket 53 is rotatably mounted via a bearing 76. Nuts 78 are threaded onto the lower ends 74a of bolts 74 to secure the idler sprockets 53 to the bars 60. Upper and lower spacer members 80 and 82, respectively, support the bearings 76. A retaining ring 84 is mounted in a groove in each idler sprocket 53 and is sandwiched between an associated bearing 76 and lower spacer member 82. Washers 86 are disposed between the heads 75 of bolts 74 and the upper spacer members 80. Disposed between the bars 60 and the nuts 78 are washers 88.

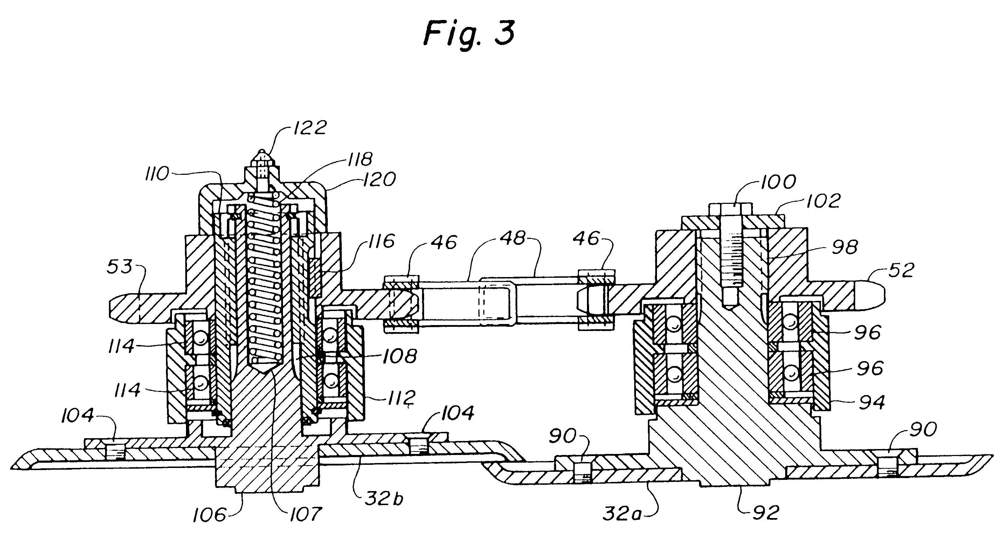

Referring now particularly to Fig. 3, a mounting arrangement for each pair of knives 32a, 32b is illustrated in cross-section. Lower knife 32a is fastened by screws 90 to a hub 92 that is rotatably mounted in a portion 94 of framework 66 by roller bearings 96. A gathering chain idler sprocket 52 is connected to the hub 92 by mating splines 98 so that the idler sprocket 52 and the hub 92 rotate in unison. A bolt 100 extends through a washer 102 into the hub 92 to secure the idler sprocket 52 on the hub 92. Upper knife 32b is fastened by screws 104 to a hub shaft 106 that has a splined connection 108 with a sleeve 110 rotatably supported in a portion 112 of framework 66 via roller bearings 114. Sleeve 110 is connected to a gathering chain idler sprocket 53 by a key 116 so that the sleeve 110, idler sprocket 53 and hub shaft 106 rotate in unison. Disposed in a central bore 107 in the hub shaft 106 is a compression spring 118 urging the hub shaft 106 and the attached knife 32b in a downward direction. Spring 118 thus insures that the cutting edges 33 of knives 32a and 32b will be maintained in contact with each other to provide the desired shearing action. A cap 120 is threaded onto an upper end of the sleeve 110 to retain the spring 118, and a grease fitting 122 is provided on the cap 120 for lubrication. One important feature of the splined connection 108 as shown in Fig. 3 is that the splines in the hub shaft 106 are longer than the splines in the sleeve 110 thereby permitting limited upward and downward movement of the hub shaft 106 and the attached upper knife 32b. This prevents the knives 32a, 32b from locking up and possibly damaging other parts of the attachment 10. Another important feature of the splined connection 108 is that the mating splines on hub shaft 106 and sleeve 110 are square sided which prevents the hub shaft 106 and the attached upper knife 32b from wobbling during operation of the attachment 10.

Referring now in particular to Figs. 5 and 6, a filler ramp 124 is positioned underneath auger 34 on the floor 13 of base frame 12 behind the divider unit 18 and adjacent the exits of the crop conveying paths 26 and 28. The ramp 124 has a top wall 126 and a pair of side walls 128. A flange 130 at one end of the ramp top wall 126 is attached by bolts 132 and nuts 133 to a support member 134 while another flange 136 at the other end of the ramp top wall 126 is secured to the floor 13 by a bolt 138 and a nut 139. When viewed from above as in Fig. 5, filler ramp 124 is wider at its front end 124a than at its rear end 124b thereby resulting in the ramp 124 being tapered in width from its front end 124a to its rear end 124b. In side elevation view as seen in Fig. 6, top wall 126 of ramp 124 slopes downwardly from front to rear. During operation of the attachment 10, ramp 124 improves the feeding of crop from the conveying paths 26, 28 into the auger 34 by preventing buildup of crop in the space between the exits of the conveying paths 26, 28. With ramp 124 installed as shown in Figs. 5 and 6, the auger 34 has increased aggressiveness near the center line CL of the attachment 10.

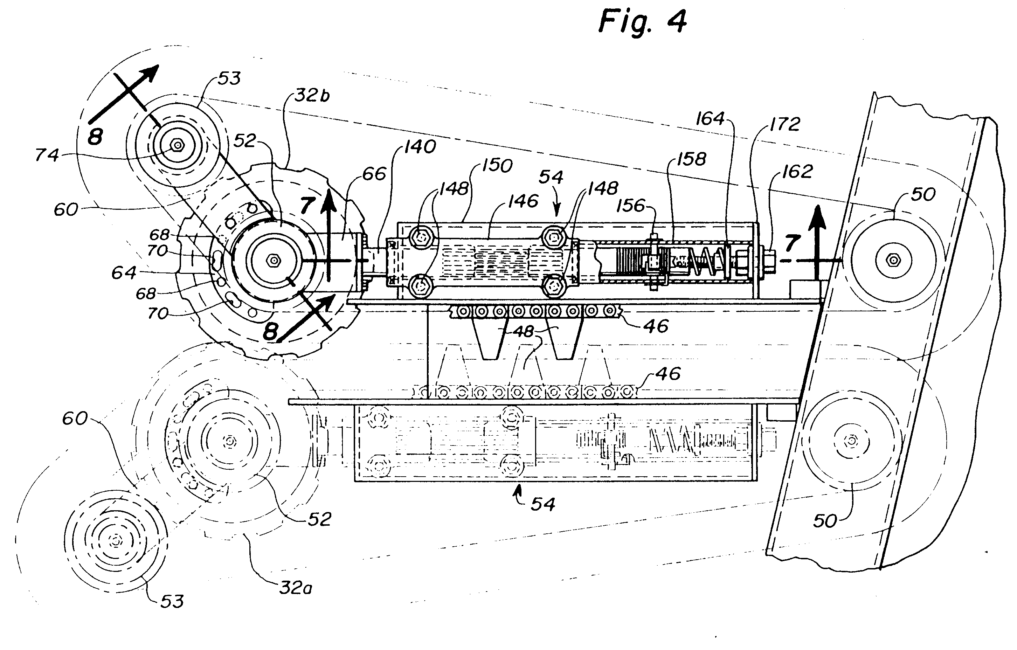

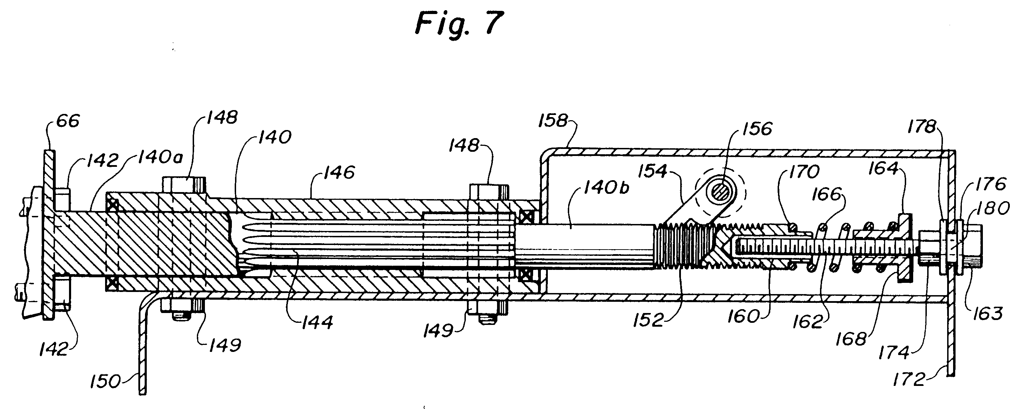

As best seen in Figs. 4 and 7, the adjustment mechanisms 54 for the gathering chains 46 each include a shaft 140 attached at one end 140a by bolts 142 to the framework 66 of base frame 12. Shaft 140 extends through, and has a splined connection 144 with, a housing 146. Bolts 148 and nuts 149 mount the housing 146 to a base frame member 150. The shaft 140 has circumferential grooves 152 at the other end 140b engaged by a pawl 154 that is rotatably mounted on a shaft 156 which extends between the sides of a cover 158. Extending into a bore 160 in the shaft 140 is an adjusting bolt 162 onto which a fitting 164 is threaded. A spring 166 is held in compression between a shoulder 168 on the fitting 164 and a shoulder 170 on the shaft 140. Adjusting bolt 162 extends through a hole in a support member 172, and a jam nut 174 is engaged with the adjusting bolt 162. A washer 176 is disposed between adjusting bolt head 163 and support member 172, and another washer 178 is disposed between jam nut 174 and support member 172. A spacer 180 on adjusting bolt 162 is located between washers 176, 178 to permit rotation of adjusting bolt 162. As seen in Fig. 7, spacer 180 is thicker than support member 172.

When the gathering chains 46 require adjustment to increase tension or take up slack therein, the adjusting mechanisms 54 are operated as follows. Adjusting bolt 162 is rotated in a direction to cause movement of the fitting 164 away from frame member 172 which results in the shaft 140 being moved toward the left in Fig. 7 relative to housing 146 due to splined connection 144. This moves framework 66 and idler sprockets 52, 53 away from drive sprocket 50 thereby tensioning the gathering chain 46. The shaft 140 is held in its adjusted position by the pawl 154 which engages the grooves 152 in the end 140b of shaft 140.

## Claims

1. A row crop attachment for a forage harvester including a base frame (12), a plurality of row crop divider units (14,16,18,20,22) arranged side-by-side on the base frame (12) to define a plurality of crop conveying paths (24,26,28,30), a pair of gathering chains (46) arranged in each crop conveying path from an entrance to an exit thereof for conveying crop material rearwardly through the crop conveying path, a pair of rotary knives (32) disposed adjacent the entrance of each crop conveying path, chain tensioning means (54), an apparatus (60) for converting each gathering chain (46) between an extended profile, where it is wrapped around a drive sprocket (50) and a pair of idler sprockets (52,53) with one of the idler sprockets (53) being located forwardly of the rotary knives (32), and a non-extended profile, where it is wrapped around the drive sprocket (50) and the other idler sprocket (52) so that the forwardly located idler sprocket (53) is eliminated, the chain tensioning means (54) being operable to tension the chain (46) both when in the extended profile and in the non-extended profile.

2. An attachment according to claim 1, wherein the converting apparatus comprises a bar (60) for supporting the forwardly located idler sprocket (53) at one end thereof.

3. An attachment according to claim 2, wherein the other end of the bar (60) is releasably fastened to the base frame (12) of the row crop attachment.

4. An attachment according to any of the preceding claims, wherein each drive sprocket (50) is located near the exit of the associated crop conveying path (24,26,28,30), and the idler sprockets (52,53) are being located near the entrance to the crop conveying path; and wherein
one idler sprocket (52) of each pair of idler sprockets also serves to drive one of the rotary knives (32).

5. An attachment according to any of the preceding claims, wherein the adjustment means (54) for adjusting tension in each of the gathering chains (46), are located rearwardly of the rotary knives (32) so as not to interfere with the operation of the gathering chains (46).

6. An attachment according to claim 1, wherein the adjustment means (54) is operable to tighten the gathering chains (46) by moving the idler sprockets (52) away from the drive sprockets.

7. An attachment according to any of the preceding claims, wherein each pair of knives (32) comprises an upper knife (32b) and a lower knife (32a), the upper knife (32b) being on a shaft (106) having a splined connection (108) with a sleeve (110) rotatably supported in a portion (112) of framework (66), the splines on the shaft (106) being longer than those on the sleeve (110), thereby permitting limited movement of the upper knife (32b) relative to the sleeve and relative to the lower knife (32a).

8. An attachment according to claim 7, wherein the splines of the splined connection are square-sided.

9. An attachment according to any of the preceding claims and further comprising an auger (34) disposed to receive crop material exiting the conveying paths (24,26,28,30), and a ramp (124) positioned beneath the auger (34) and extending from the latter to at least an exit of one of the conveying paths (24,26,28,30).

10. An attachment according to claim 9, wherein the ramp (124) is wider at the end adjacent the auger (34) than at the end adjacent the at least one exit.

## Patentansprüche

1. Reihenfrucht-Anbaugerät für einen Feldhäcksler, mit einem Grundrahmen (12), mit einer Vielzahl von Reihenfrucht-Teilerein heiten (14,16,18,20,22), die Seite an Seite auf dem Grundrahmen (12) angeordnet sind, um eine Vielzahl von Erntematerial-Förderpfaden (24,26,28,30) zu bilden, wobei in jedem Erntematerial-Förderpfad zwei Sammelketten (46) von einem Eintrittsende bis zu einem Austrittsende des Förderpfades angeordnet sind, um Erntematerial in Rückwärtsrichtung über den Erntematerial-Förderpfad zu fördern, mit einem benachbart zum Eintrittsende jedes Erntematerial-Förderpfades angeordneten Paar von rotierenden Messern (32), mit Kettenspanneinrichtungen (54), mit einer Vorrichtung (60) zur Umstellung jeder Sammelkette zwischen einem vorspringenden Profil, bei dem die Sammelkette um ein Antriebskettenrad (50) und zwei Leerlaufkettenräder (52,53) geschlungen ist, von denen ein Leerlaufkettenrad (53) vor den rotierenden Messern (32) liegend angeordnet ist, und einem nicht vorspringenden Profil, bei dem die Sammelkette um das Antriebskettenrad (50) und das andere Leerlaufkettenrad (52) geschlungen ist, so daß das vornliegende Leerlaufkettenrad (53) beseitigt ist, wobei die Kettenspannvorrichtung (54) zum Spannen der Kette (46) sowohl mit vorspringendem Profil als auch mit nicht vorspringendem Profil betreibbar ist.

2. Anbaugerät nach Anspruch 1, bei dem die Umstellvorrichtung eine Stange (60) zur Halterung des vornliegenden Leerlaufkettenrades (53) an seinem einen Ende aufweist.

3. Anbaugerät nach Anspruch 2, bei dem das andere Ende der Stange (60) lösbar an dem Grundrahmen (12) des ReihenfruchtAnbaugerätes befestigt ist.

4. Anbaugerät nach einem der vorhergehenden Ansprüche, bei dem jedes Antriebskettenrad (50) in der Nähe des Austrittsendes des zugehörigen Erntematerial-Förderpfades (24,26,28,30) liegt und die Leerlaufkettenräder (52,53) in der Nähe des Eintrittsendes des Erntematerial-Förderpfades liegen, und bei dem
ein Leerlaufkettenrad (52) jedes Paares von Leerlaufkettenrädern weiterhin zum Antrieb eines der rotierenden Messer (32) dient.

5. Anbaugerät nach einem der vorhergehenden Ansprüche, bei dem die Einstelleinrichtungen (54) zur Einstellung der Spannung in jeder der Sammelketten (46) rückwärts von den rotierenden Messern (32) angeordnet sind, so daß sie die Betriebsweise der Sammelketten (46) nicht stören.

6. Anbaugerät nach Anspruch 1, bei dem die Einstelleinrichtung (54) zum Spannen der Sammelketten (46) durch Bewegen der Leerlaufkettenräder (52) von den Antriebskettenrädern fort betreibbar ist.

7. Anbaugerät nach einem der vorhergehenden Ansprüche, bei dem jedes Paar von Messern (32) ein oberes Messer (32b) und ein unteres Messer (32a) umfaßt, wobei das obere Messer (32b) auf einer Welle (106) angeordnet ist, die eine Keilnutverbindung (108) mit einer Hülse (110) aufweist, die drehbar in einem Abschnitt (112) von Rahmenteilen (66) gelagert ist, wobei die Keilnutverbindungen auf der Welle (106) länger sind als die auf der Hülse (110), so daß eine begrenzte Bewegung des oberen Messers (32b) gegenüber der Hülse und gegenüber dem unteren Messer (32a) möglich ist.

8. Anbaugerät nach Anspruch 7, bei dem die Keilnuten der Keilnutverbindung quadratische Seitenflächen aufweisen.

9. Anbaugerät nach einem der vorhergehenden Ansprüche, das weiterhin eine Förderschnecke (34), die zur Aufnahme von Erntematerial angeordnet ist, das die Förderpfade (24,26,28,30) verläßt, und eine Rampe (124) umfaßt, die unterhalb der Förderschnecke (34) angeordnet ist und sich von der letzteren bis zu zumindest einem Austrittsende eines der Förderpfade (24,26,28, 30) erstreckt.

10. Anbaugerät nach Anspruch 9, bei dem die Rampe (124) an dem der Förderschnecke (34) benachbarten Ende breiter ist, als an dem Ende, das benachbart zu dem zumindestens einen Austrittsende liegt.

## Revendications

1. Accessoire pour cultures en lignes pour une chargeuse de fourrage comprenant un châssis de base (12), une pluralité d'unités de division de cultures en lignes (14,16,18,20,22) disposées côte à côte sur le châssis de base (12) pour définir une pluralité de passages de transport de récolte (24,26,28,30), une paire de chaînes haveuses (46) disposées dans chacun des passages de transport de récolte au départ d'une entrée vers une sortie de ceux-ci pour transporter du matériau de récolte vers l'arrière au travers des passages de transport de récolte, une paire de couteaux (32) à rotation disposés adjacents à l'entrée de chacun des passages de transport de récolte, des moyens de tension de chaîne (54), un appareil (60) pour convertir chaque chaîne haveuse (46) entre d'une part un profil étendu dans lequel elle est enroulée autour d'un pignon d'entraînement (50) et d'une paire de pignons tendeurs (52,53) avec l'un des pignons tendeurs (53) situé à l'avant des couteaux (32) à rotation, et d'autre part un profil non étendu dans lequel elle est enroulée autour du pignon d'entraînement (50) et de l'autre pignon tendeur (52), si bien que le pignon tendeur (53) situé à l'avant est éliminé, les moyens de tension de chaîne (54) étant actionnables pour tendre la chaîne (46), tant dans le profil tendu que dans le profil non tendu.

2. Accessoire selon la revendication 1, dans lequel l'appareil de conversion comprend une barre (60) pour maintenir le pignon tendeur (53) situé à l'avant en une extrémité de celle-ci.

3. Accessoire selon la revendication 2, dans lequel l'autre extrémité de la barre (60) est fixée de manière détachable au châssis de base (12) de l'accessoire pour cultures en lignes.

4. Accessoire selon l'une quelconque des revendications précédentes, dans lequel chaque pignon d'entraînement (50) est situé à proximité de la sortie des passages de transport de récolte (24,26,28,30) associés, et dans lequel les pignons tendeurs (52,53) sont situés à proximité de l'entrée des passages de transport de récolte; et dans lequel
un pignon tendeur (52) de chaque paire de pignons tendeurs sert également à entraîner l'un des couteaux (32) à rotation.

5. Accessoire selon l'une quelconque des revendications précédentes, dans lequel les moyens de réglage (54) pour régler la tension de chaque chaîne haveuse (46) sont situés à l'arrière des couteaux (32) à rotation de manière à ne pas interférer avec le fonctionnement des chaînes haveuses (46).

6. Accessoire selon la revendication 1, dans lequel les moyens de réglage (54) sont actionnables pour serrer les chaînes haveuses (46) en écartant les pignons tendeurs (52) des pignons d'entraînement.

7. Accessoire selon l'une quelconque des revendications précédentes, dans lequel chaque paire de couteaux (32) comprend un couteau supérieur (32b) et un couteau inférieur (32a), le couteau supérieur (32b) étant sur un arbre (106) présentant une association cannelée (108) avec une douille (110) maintenue à rotation dans une portion (112) du châssis (66), les cannelures sur l'arbre (106) étant plus longues que celles sur la douille (110), ce qui permet un mouvement limité du couteau supérieur (32b) par rapport à la douille et par rapport au couteau inférieur (32a).

8. Accessoire selon la revendication 7, dans lequel les cannelures de l'association cannelée ont un profil rectangulaire.

9. Accessoire selon l'une quelconque des revendications précédentes et comprenant en outre une vis (34) disposée pour recevoir du matériau de récolte sortant des chemins de transport (24,26,28,30) et une rampe (124) située sous la vis (34) et se prolongeant de cette dernière vers au moins une sortie de l'un des passages de transport (24,26,28,30).

10. Accessoire selon la revendication 9 dans lequel la rampe (124) est plus large en l'extrémité adjacente à la vis (34) qu'en l'extrémité adjacente à ladite au moins une sortie.
